# EUROPEAN PATENT APPLICATION

(11) **EP 3 438 600 A1**
(43) Date of publication of application: **06.02.2019**
(21) Application number: 18186755.7
(22) Date of filing: 01.08.2018
(51) Int. Cl.: G01B 7/28, G01B 11/25, G03B 15/07, H04N 5/225, H04N 5/235, G06T 7/586, G06T 7/50

(54) **ARTICLE IMAGE CAPTURING APPARATUS**

(30) Priority: 02.08.2017 JP 2017149656
(71) Applicant: Toshiba TEC Kabushiki Kaisha, Tokyo 141-8562 (JP)
(72) Inventor: ARIGA, Norimasa, Shinagawa-ku,, Tokyo 141-8562 (JP); TAIRA, Kazuki, Shinagawa-ku,, Tokyo 141-8562 (JP); YASUNAGA, Masaaki, Shinagawa-ku,, Tokyo 141-8562 (JP); ISHIKA, So, Shinagawa-ku,, Tokyo 141-8562 (JP); SAKAMOTO, Yoshio, Shinagawa-ku,, Tokyo 141-8562 (JP)
(74) Representative: Takeuchi, Maya

(57) **Abstract**

An article image capturing apparatus according to an embodiment includes a camera that captures an image of an article. A first lighting unit illuminates a first side of the article facing the camera. The article is positioned between a second lighting unit and the camera. The second lighting unit illuminates a second side of the article. The camera captures a first image of the surface when the first lighting unit is turned on. The camera captures a second image of the surface when the first lighting unit is turned off and the second lighting unit is turned on. A processor determines, based on the second image, an outer shape of the article. The processor extracts, from the first image, an image of the article based on the outer shape of the article. A storage device saves the extracted image of the article.

## Description

### FIELD

Embodiments described herein relate generally to an article image capturing apparatus.

### BACKGROUND

In the related art, an article image capturing system has a function of extracting an image of an article from an image captured with a camera or the like. A process of accurately extracting the image of the article from the image obtained by capturing an image of an area that includes the article, with the camera or the like is an important process in image processes such as article recognition processing. For that reason, there is a demand for an article image capturing system capable of accurately and easily extracting the image of the article from a captured image.

In the related art, there is an article image capturing system which disposes a lighting unit at a position facing a camera and at the same time captures an image of the article illuminated by the lighting unit. In such an article image capturing system, in order to extract the image of the article from the captured image, it is necessary to perform processing such as identifying an outer shape of the article using color information, and the processing becomes complicated.

### SUMMARY OF INVENTION

To solve such problem, there is provided an article image capturing apparatus comprising:
a camera configured and positioned to capture an image of a surface on which an article is placed;
a first lighting unit configured and positioned to illuminate a first side of the article placed on the surface, the first side of the article facing the camera;
a second lighting unit positioned facing the camera so that the surface on which the article is placed is between the second lighting unit and the camera, and configured to illuminate a second side of the article opposite the first side;
a storage device; and
a processor programmed to control the camera, the first lighting unit, the second lighting unit, and the storage unit to:
capture a first image of the surface in a state in which the first lighting unit is turned on,
capture a second image of the surface in a state in which the first lighting unit is turned off and the second lighting unit is turned on,
   determine, based on the second image, an outer shape of the article,
   extract, from the first image, an image of the article based on the outer shape of the article, and
store the extracted image of the article in the storage device.

Preferably, the apparatus further comprises a transparent plate having the surface on which the article is placed, wherein,
the first lighting unit is positioned above the transparent plate, and
the second lighting unit is positioned below the transparent plate.

Preferably still, the apparatus further comprises:
a lower side camera positioned below the transparent plate, wherein
the camera is an upper side camera positioned above the transparent plate, and
the processor is further programmed to control the lower side camera, the first lighting unit, the second lighting unit, and the storage device to:
   capture a third image of the surface in a state in which the second lighting unit is turned on,
capture a fourth image of the surface in a state in which the second lighting unit is turned off and the first lighting is turned on,
determine, based on the fourth image, an outer shape of a bottom side of the article,
extract, from the third image, an image of the bottom side of article based on the outer shape of the bottom surface of the article, and
store the extracted image of the bottom side of the article in the storage device.

Preferably yet, the apparatus further comprises:
a right side camera positioned on a right side of the transparent plate with respect to the surface;
a right side lighting unit configured and positioned to illuminate a right side of the article placed on the surface; and
a left side lighting unit positioned facing the right side camera so that the surface on which the article is placed is between the left side lighting unit and the right side camera, and configured to illuminate a left side of the article opposite the right side, wherein
the processor is further programmed to control the right side camera, the right side lighting unit, the left side lighting unit, and the storage device to:
   capture, with the right side camera, a fifth image of the right side of the surface in a state in which the right side lighting unit is turned on,
   capture, with the right side camera, a sixth image of the surface in a state in which the right side lighting unit is turned off and the left side lighting unit is turned on,
   determine, based on the sixth image, an outer shape of a right side of the article,
   extract, from the fifth image, an image of the right surface of article based on the outer shape of the right side of the article, and
   store the extracted image of the right side of the article in the storage device.

Suitably, the apparatus further comprises:
a left side camera positioned on a left side of the transparent plate with respect to the surface, wherein
the processor is further programmed to control the left side camera, the right side lighting unit, the left side lighting unit, and the storage device to:
   capture, with the left side camera, a seventh image of the left side of the surface in a state in which the left side lighting unit is turned on,
   capture, with the left side camera, an eight image of the surface in a state in which the left side lighting unit is turned off and the right side lighting unit is turned on,
   determine, based on the eighth image, an outer shape of a left side of the article,
   extract, from the seventh image, an image of the left surface of article based on the outer shape of the left side of the article, and
      store the extracted image of the left side of the article in the storage device.

Suitably still, the apparatus further comprises:
a rotation mechanism configured to rotate the transparent plate, wherein
   the processor is further configured to:
   after the fifth and sixth images are captured, control the rotation mechanism to rotate the transparent plate by a predetermined degree,
   after the transparent plate is rotated by the predetermined degree, capture, with the right side camera, a seventh image of the right side of the surface in a state in which the right side lighting unit is turned on, and capture, with the right side camera, an eighth image of the surface in a state in which the right side lighting unit is turned off and the left side lighting unit is turned on,
   determine, based on the eight image, an outer shape of a right side of the article after the transparent plate is rotated by the predetermined degree,
   extract, from the seventh image, an image of the right side of article after the transparent plate is rotated by the predetermined degree, based on the outer shape of the right side of the article, and
   store the extracted image of the right side of the article after the transparent plate is rotated by the predetermined degree, in the storage device.

Suitably yet, the apparatus further comprises:
a first diffusion reflector configured and positioned to reflect light emitted from the first lighting unit to illuminate the first side of the article.

Typically, the apparatus further comprises:
a second diffusion reflector configured and positioned to reflect light emitted from the first lighting unit to illuminate the second side of the article.

Typically still, the apparatus further comprises:
a polarization filter positioned between the camera and the second lighting unit and configured to filter out light having a specific polarization.

Typically yet, the polarization filter filters out light having the specific polarization selected based on a semi-transparent portion of the article that transmits, from unpolarized light incident thereon, substantially only light having the specific polarization.

The invention also relates to an article image capturing apparatus comprising:
a right side camera configured and positioned to capture an image of a right side of an article placed on a surface;
a right side lighting unit configured and positioned to illuminate the right side of the article placed on the surface;
a left side lighting unit positioned facing the right side camera so that the surface on which the article is placed is between the left side lighting unit and the right side camera, and configured to illuminate a left side of the article opposite the right surface;
a storage device; and
a processor programmed to control the right side camera, the right side lighting unit, the left side lighting unit, and the storage device to:
   capture, with the right side camera, a first image of the right side in a state in which the right side lighting unit is turned on,
   capture, with the right side camera, a second image of the right side in a state in which the right side lighting unit is turned off and the left side lighting unit is turned on,
   determine, based on the second image, an outer shape of the right side of the article,
   extract, from the first image, an image of the right side of the article based on the outer shape of the right side of the article, and
   store the extracted image of the right side of the article in the storage device.

Preferably, the apparatus further comprises:
an upper side camera configured and positioned to capture an upper side of the article place on the surface;
an upper side lighting unit configured and positioned to illuminate an upper side of the article placed on the surface, the upper side of the article facing the upper side camera; and
a lower side lighting unit positioned facing the upper side camera so that the surface on which the article is placed is between the lower side lighting unit and the upper side camera, and configured to illuminate a lower side of the article opposite the upper side, wherein
the processor is further configured to control the upper side camera, the upper side lighting unit, the lower side lighting unit, and the storage device to:
   capture a third image of the upper side in a state in which the upper side lighting unit is turned on,
capture a fourth image of the upper side in a state in which the upper side lighting unit is turned off and the lower side lighting unit is turned on,
determine, based on the fourth image, an outer shape of the upper side of the article,
extract, from the third image, an image of the upper side of article based on the outer shape of the upper side of the article, and
store the extracted image of the upper side of the article in the storage device.

Preferably still, the apparatus further comprises: a transparent plate having the surface on which the article is placed, wherein
the upper side lighting unit is positioned above the transparent plate, and
the lower side lighting unit is positioned below the transparent plate.

Preferably yet, the apparatus further comprises: a rotation mechanism configured to rotate the transparent plate, wherein
the processor is further configured to:
after the first and second images are captured, control the rotation mechanism to rotate the transparent plate by a predetermined degree,
after the transparent plate is rotated by the predetermined degree, capture, with the right side camera, a third image of the right side of the article in a state in which the right side lighting unit is turned on, and capture, with the right side camera, a fourth image of the surface in a state in which the right side lighting unit is turned off and the left side lighting unit is turned on,
determine, based on the fourth image, an outer shape of the right side of the article after the transparent plate is rotated by the predetermined degree,
extract, from the third image, an image of the right side of the article after the transparent plate is rotated by the predetermined degree, based on the outer shape of the right side of the article, and
store the extracted image of the right side of the article after the transparent plate is rotated by the predetermined degree, in the storage device.

Suitably, the apparatus further comprises:
a first diffusion reflector configured and positioned to reflect light emitted from the first lighting unit to illuminate the first side of the article.

Suitably still, the apparatus further comprises:
a polarization filter positioned between the surface and the second lighting unit and configured to filter out light having a specific polarization.

Suitably yet, the polarization filter filters out light having the specific polarization selected based on a semi-transparent portion of the article that transmits, from unpolarized light incident thereon, substantially only light having the specific polarization.

Typically, the apparatus further comprises:
a left side camera positioned on a left side of the transparent plate with respect to the surface, wherein
the processor is further programmed to control the left side camera, the right side lighting unit, the left side lighting unit, and the storage device to:
   capture, with the left side camera, a third image of the left side of the surface in a state in which the left side lighting unit is turned on,
   capture, with the left side camera, a fourth image of the surface in a state in which the left side lighting unit is turned off and the right side lighting unit is turned on,
   determine, based on the fourth image, an outer shape of a left surface of the article,
   extract, from the third image, an image of the left side of article based on the outer shape of the left side of the article, and
   store the extracted image of the left side of the article in the storage device.

The invention also concerns a method of capturing an image of an article, the method comprising:
capturing, with a camera, a first image of a first side of the article in a state in which first lighting unit is turned on to illuminate the first side;
capturing, with the camera, a second image of the first side of the article in a state in which the first lighting unit is turned off and a second lighting is turned on to illuminate a second side of the article opposite the first side;
determining, based on the second image, an outer shape of the article;
extracting, from the first image, an image of the article based on the outer shape of the article; and
saving the extracted image of the article.

Preferably, the method further comprises:
polarizing the light emitted from the second lighting unit to a specific polarization, wherein the article is includes a partially transparent portion that does not transmit light having the specific polarization that is incident thereon.

The invention further relates to a non-transitory computer readable medium storing a program causing a computer to execute the method described above.

### DESCRIPTION OF THE DRAWINGS

FIG. 1 is a diagram schematically illustrating an example configuration of an article image capturing apparatus according to a first embodiment.
FIG. 2 is a block diagram illustrating an example configuration of a control system in the article image capturing apparatus according to the first embodiment.
FIG. 3 is a flowchart illustrating an operation of the article image capturing apparatus according to the first embodiment.
FIG. 4 is a diagram schematically illustrating an example configuration of an article image capturing apparatus according to a second embodiment.
FIG. 5 is a block diagram illustrating an example configuration of a control system in the article image capturing apparatus according to the second embodiment.
FIG. 6 is a flowchart illustrating an operation of the article image capturing apparatus according to the second embodiment.
FIG. 7 is a diagram schematically illustrating an example configuration of an article image capturing apparatus according to a third embodiment.
FIG. 8 is a block diagram illustrating an example configuration of a control system in the article image capturing apparatus according to the third embodiment.
FIG. 9 is a flowchart illustrating an operation of the article image capturing apparatus according to the third embodiment.
FIG. 10 is a flowchart illustrating an operation of a right surface image acquisition process in the article image capturing apparatus according to the third embodiment.
FIG. 11 is a flowchart illustrating an operation of a left surface image acquisition process in the article image capturing apparatus according to the third embodiment.

### DETAILED DESCRIPTION

Embodiments provide an article image capturing apparatus capable of accurately extracting an image of an article from a captured image.

An article image capturing apparatus according to an embodiment includes a camera that captures an image of a surface on which an article is placed. A first lighting unit illuminates a first side of the article placed on the surface, the first side of the article facing the camera. A second lighting unit faces the camera so that the surface on which the article is placed is between the second lighting unit and the camera. The second lighting unit illuminates a second side of the article opposite the first side. A processor is programmed to control the camera, the first lighting unit, the second lighting unit, and a storage unit. The camera captures a first image of the surface in a state in which the first lighting unit is turned on. The camera captures a second image of the surface in a state in which the first lighting unit is turned off and the second lighting unit is turned on. The processor determines, based on the second image, an outer shape of the article. The processor extracts, from the first image, an image of the article based on the outer shape of the article. The storage device saves the extracted image of the article.

Hereinafter, embodiments will be described with reference to the drawings.

### First Embodiment

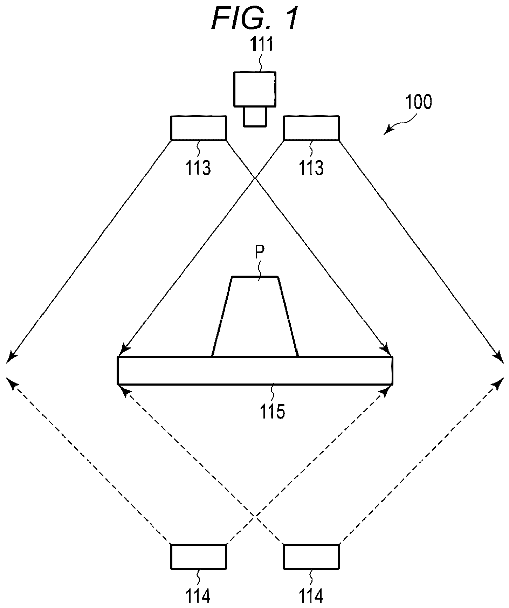

FIG. 1 is a diagram schematically illustrating an example configuration of an article image capturing apparatus 100 according to a first embodiment.

As illustrated in FIG. 1, the article image capturing apparatus 100 according to the first embodiment includes a camera 111, an upper side lighting unit 113, a lower side lighting unit 114, and a transparent plate 115. The camera 111, the upper side lighting unit 113, and the lower side lighting unit 114 are connected to an image processing apparatus 120 (described later). The image processing apparatus 120 is a computer or the like, and controls operations of the camera 111, the upper side lighting unit 113, and the lower side lighting unit 114. The image processing apparatus 120 also has a function of processing an image captured by the camera 111.

An article P whose image is to be captured by the article image capturing apparatus 100 is placed at a placement position on the transparent plate 115. The camera 111 captures an image of the article P placed at the placement position on the transparent plate 115. The upper side lighting unit 113 and the lower side lighting unit 114 illuminate the article P placed at the placement position on the transparent plate 115. The transparent plate 115 is configured in such a way that a surface of the transparent plate 115 on which the article P is to be placed is horizontal so as to make it possible for the article P to be stably placed.

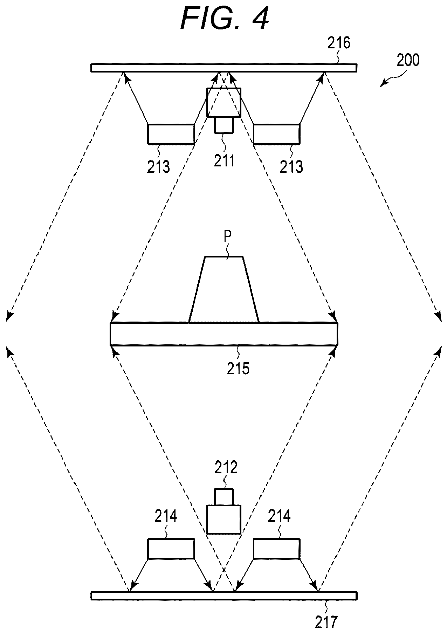

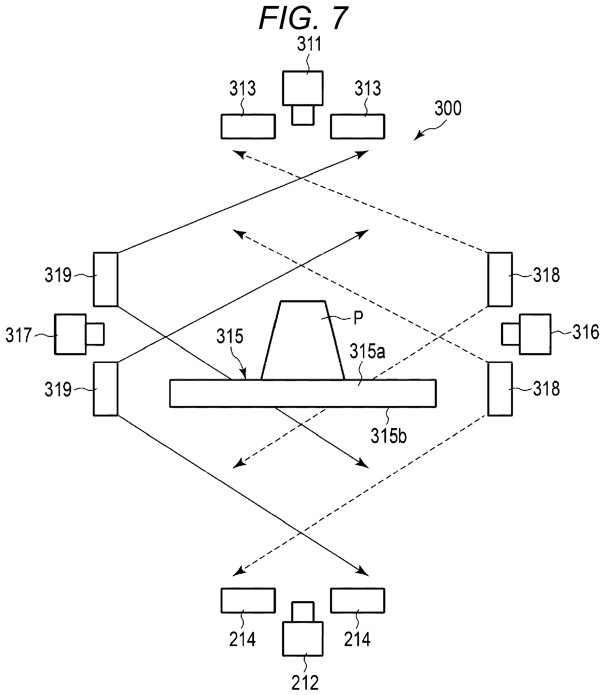

In the following description including the explanation of Figs. 4 and 7, the direction perpendicular to the surface of the transparent plate 115 on which the article P is stably placed is defined as the vertical direction, and the direction parallel to the surface is defined as the horizontal direction.

The camera 111 is positioned above (first side of) the transparent plate 115. The camera 111 is disposed to capture an image of a surface of the transparent plate 115 from above, and is set so that an area where the article P is positioned on the transparent plate 115 is included in an image capturing range. The camera 111 includes an imaging unit, an optical system, and a control unit. The imaging unit includes a photoelectric converter that converts light into an electric signal. The optical system guides light from the imaging range to the photoelectric converter of the imaging unit. The control unit controls the imaging unit to capture the image. The control unit controls the image capturing according to an instruction from the image processing apparatus 120.

The upper side lighting unit 113 is positioned above the transparent plate 115, and illuminates the placement position of the transparent plate 115 with light from above. The upper side lighting unit 113 is positioned so that the area where the article P is placed on the transparent plate 115 is included in an illuminated area. Light from the upper side lighting unit 113 may illuminate the article P placed on the transparent plate 115 via a reflection plate or the like.

The lower side lighting unit 114 is positioned below (second side of) the transparent plate 115 and illuminates the placement position of the transparent plate 115 with light from below. The lower side lighting unit 114 is positioned so that the area where the article P is placed on the transparent plate 115 is included in the illuminated area. The lower side lighting unit 114 illuminates the transparent plate from below so that a silhouette of the article P placed on the transparent plate 115 becomes clearer when the transparent plate 115 is viewed from above. An arrangement may be adopted in which the article P placed on the transparent plate 115 is illuminated with light from the lower side lighting unit 114 via a reflection plate or the like.

In the configuration illustrated in FIG. 1, the upper side lighting unit 113 and the lower side lighting unit 114 are positioned facing each other with the transparent plate 115 interposed therebetween. Each of the upper side lighting unit 113 and the lower side lighting unit 114 includes a control unit and a light emitting unit. The light emitting unit may have a plurality of light sources or may have one light source. The control unit controls light emission by the light emitting unit. The control unit controls light emission of the light emitting unit according to an instruction from the image processing apparatus 120.

The positions of the camera, the upper side lighting unit, and the lower side lighting unit are not limited to the arrangement illustrated in FIG. 1. The camera may be disposed at a position where an image of a surface, including the article placed at the placement position, can be captured. The first lighting unit may be disposed so as to illuminate an area from the direction from which the camera captures an image, and the second lighting unit may be disposed at a position facing the camera with the placement position of the article interposed therebetween. For example, the camera is not limited to the above of the placement relative to the article, and may be positioned below the placement position of the article when obtaining the lower surface image of the article.

Next, an example configuration of a control system in the image processing apparatus 120 will be described.

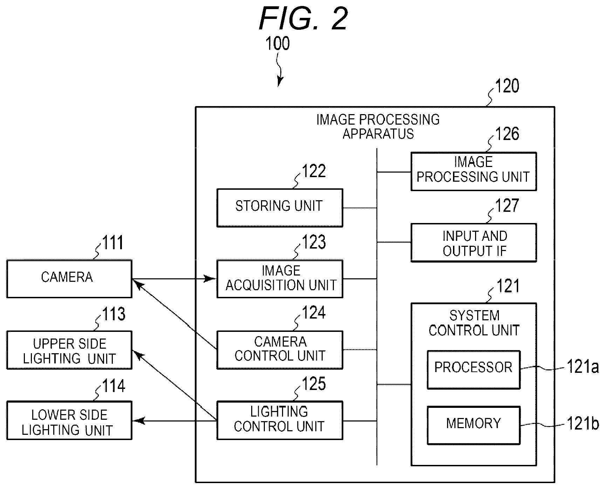

FIG. 2 is a block diagram illustrating an example configuration of the image processing apparatus 120.

As illustrated in FIG. 2, the image processing apparatus 120 includes a system control unit 121, a storing unit 122, an image acquisition unit 123, a camera control unit 124, a lighting control unit 125, an image processing unit 126, an input and output IF 127, and the like.

The system control unit 121 controls each unit. The system control unit 121 includes a processor 121a and a memory 121b. The processor 121a performs various control and data processing by executing a program. The memory 121b includes a work memory such as a RAM and a program memory such as a ROM. The processor 121a executes an operation as the system control unit 121 by executing a program stored in the memory 121b.

The storing unit 122 is a storage device that stores data. The storing unit 122 is a rewritable nonvolatile storage device. For example, the storing unit 122 is configured with a hard disk drive (HDD), a solid state drive (SSD), a storage medium, or the like. The storing unit 122 stores an image captured by the camera 111 or an image of the article (article image) extracted from the captured image.

The image acquisition unit 123 acquires an image captured by the camera 111. The camera control unit 124 controls the operation of the camera 111 by supplying a control signal to the camera 111. The image acquisition unit 123 and the camera control unit 124 may be a single unit connected to the camera 111. The image acquisition unit 123 may be realized by a dedicated integrated circuit (IC), or may be realized as a processor that executes a program. For example, the image acquisition unit 123 may be a function realized when the processor 121a of the system control unit 121 executes a program. The camera control unit 124 may be realized by a dedicated integrated circuit (IC), or may be realized as a processor that executes a program. For example, the camera control unit 124 may be a function realized when the processor 121a of the system control unit 121 executes a program.

The lighting control unit 125 controls the upper side lighting unit 113 and the lower side lighting unit 114. For example, the lighting control unit 125 can perform control to turn on one of the upper side lighting unit 113 and the lower side lighting unit 114 and turn off the other. The lighting control unit 125 may be realized by a dedicated integrated circuit (IC), or may be realized as a processor that executes a program. For example, the lighting control unit 125 may be a function realized when the processor 121a of the system control unit 121 executes a program.

The image processing unit 126 performs predetermined image processing on an image and outputs the processed image. For example, the image processing unit 126 performs image processing of extracting an image of an article (article image) from a captured image captured by the camera 111 and outputting the article image. The image processing unit 126 may be realized by a dedicated circuit (IC), or may be realized as a processor that executes a program. For example, the image processing unit 126 may be a function realized when the processor 121a of the system control unit 121 executes a program.

The input and output IF 127 is an interface for transmitting and receiving data to and from an external apparatus. For example, the input and output IF 127 outputs, to the external apparatus, the article image extracted from the captured image by the image processing unit 126. The external apparatus connected to the input and output IF 127 is an object recognition apparatus for recognizing an article by an image or an apparatus for creating dictionary data for use in a system for recognizing the article based on the image. The external apparatus connected to the input and output IF 127 is not limited to an apparatus for a specific purpose, but may be any apparatus that performs processing using the article image extracted from the captured image, for example.

An operation of an article image capturing apparatus according to the first embodiment will be described.

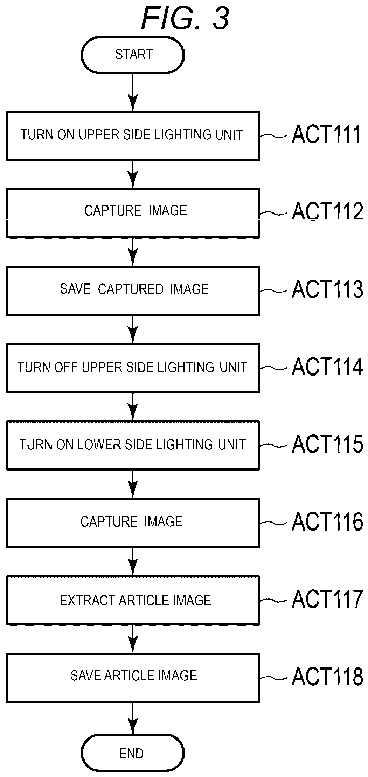

FIG. 3 is a flowchart for explaining an operation of the article image capturing apparatus according to the first embodiment.

Here, an example of the operation realized by the system control unit 121 of the image processing apparatus 120 according to the first embodiment will be described.

First, an article whose image is to be captured is positioned on the transparent plate 115. In a state where an article is disposed on the transparent plate 115, the system control unit 121 of the image processing apparatus 120 starts image capturing. When image capturing is started, the system control unit 121 turns on the upper side lighting unit 113 and turns off the lower side lighting unit 114 via the lighting control unit 125 (ACT 111).

In a state where the upper side lighting unit 113 is turned on, the system control unit 121 causes the camera 111 to capture an image via the camera control unit 124 (ACT 112). The camera 111 captures an image of an image capturing area including the article P on the transparent plate 115 illuminated with light from the upper side lighting unit 113 according to a control signal, which instructs image capturing, from the camera control unit 124. The camera 111 supplies the captured image to the image processing apparatus 120. That is, in the state where the upper side lighting unit 113 is turned on, the camera 111 captures an image (hereinafter, referred to as a captured image) that includes an image of the article in which a color and pattern of the article can be identified. The captured image includes the image of the article P on the transparent plate 115 as viewed from above.

In the image processing apparatus 120, the image acquisition unit 123 acquires the captured image that is captured by the camera 111. The system control unit 121 saves the captured image acquired via the image acquisition unit 123 in the storing unit 122 (ACT 113).

When the captured image is stored in the storing unit 122, the system control unit 121 turns off the upper side lighting unit 113 (ACT 114) and turns on the lower side lighting unit 114 (ACT 15), via the lighting control unit 125. In a state where the lower side lighting unit 114 is turned on, the system control unit 121 causes the camera 111 to capture an image via the camera control unit 124 (ACT 116).

When the lower side lighting unit 114 is turned on, light from the lower side lighting unit 114 directly enters the camera 111 through a region of the transparent plate 115, where the article P is not located. Light does not enter the camera 111 from the region of the transparent plate 115 where the article P is located, , since light from the lower side lighting unit 114 is shielded by the article. For that reason, in a state where the lower side lighting unit 114 is turned on, the camera 111 captures an image (hereinafter, also referred to as a silhouette image) illustrating a silhouette of the article P placed on the transparent plate 115.

In the image processing apparatus 120, the image acquisition unit 123 acquires a silhouette image captured by the camera 111. The system control unit 121 supplies the silhouette image acquired by the image acquisition unit 123 to the image processing unit 126, and performs image processing on the captured image saved in the storing unit 122 (ACT 117). The image processing unit 126 specifies a contour of the article P from the acquired silhouette image and extracts an image of the article (hereinafter, also referred to as an article image) from the captured image according to the specified contour (ACT 117).

Here, the camera 111 captures the captured image and the silhouette image under the same image capturing condition (same position and the same direction). In this case, the contour of the article indicated by the silhouette image generally indicates an outer shape of the article and indicates the area of the article image in the captured image. By utilizing such a feature, the image processing unit 126 can extract an image of the inside of the contour of the article indicated by the silhouette image from the captured image to accurately extract the article image.

When an article image is extracted from the captured image, the system control unit 121 stores the extracted article image in the storing unit 122 (ACT 118). The system control unit 121 may output the extracted article image to the external apparatus through the input and output IF 127. In the configuration illustrated in FIG. 1, the camera 111 captures the image of the article P from above. For that reason, the extracted article image is an image of the article P on the transparent plate 115 as viewed from above.

A procedure of the process described above may be replaced as appropriate. For example, the order of turning on the upper side lighting unit 113 and the lower side lighting unit 114 may be performed in a reverse order to the procedure described above. That is, an image processing apparatus 220 may capture an image including the upper surface (or the lower surface) of the article after the silhouette image is acquired in advance.

By the process as described above, the article image capturing apparatus 100 according to the first embodiment can acquire an article image accurately extracted from the captured image captured by the camera using the silhouette image.

### Second Embodiment

Next, a second embodiment will be described.

FIG. 4 is a diagram schematically illustrating an example configuration of an article image capturing apparatus 200 according to a second embodiment.

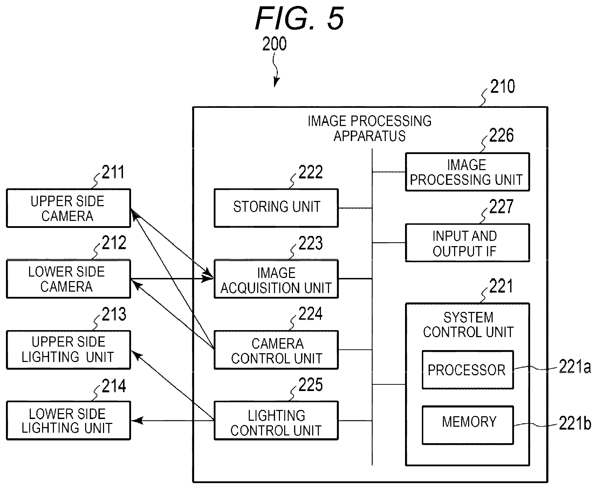

As illustrated in FIG. 4, the article image capturing apparatus 200 according to the second embodiment includes an upper side camera 211, a lower side camera 212, an upper side lighting unit 213, a lower side lighting unit 214, a transparent plate 215, an upper side diffusion reflector 216, and a lower side diffusion reflector 217. The upper side camera 211, the lower side camera 212, the upper side lighting unit 213, and the lower side lighting unit 214 are connected to an image processing apparatus 220 (see FIG. 5) described later.

In the configuration illustrated in FIG. 4, the lower side camera 212, the upper side diffusion reflector 216, and the lower side diffusion reflector 217 are additional items compared to the structure illustrated in FIG. 1 described in the first embodiment, and the direction in which upper side lighting unit 213 and lower side lighting unit 214 transmit light is changed. The upper side camera 211 and the transparent plate 215 illustrated in FIG. 4 can be realized by the same camera as the camera (upper side camera) 111 and the transparent plate 115 illustrated in FIG. 1 described in the first embodiment, respectively. For that reason, detailed description of the upper side camera 211 and the transparent plate 215 will be omitted.

The lower side camera 212 is provided below the transparent plate 215. The lower side camera 212 is arranged so as to capture the transparent plate 215 from below, and is set so that the area where the article is positioned on the transparent plate 215 is included in the image capturing range. That is, the lower side camera 212 captures an image of a lower surface of the article placed on the transparent plate 215 through the transparent plate 215. Similar to the camera 111, the lower side camera 212 includes an imaging unit, an optical system, and a control unit, and captures an image according to an instruction from the image processing apparatus 220.

The upper side lighting unit 213 is provided above the transparent plate 215. The upper side diffusion reflector 216 is provided above the upper side lighting unit 213. The upper side lighting unit 213 emits light toward the upper side diffusion reflector 216. The upper side diffusion reflector 216 diffusely reflects light from the upper side lighting unit 213. The transparent plate 215 is illuminated with diffusively reflected light by the upper side diffusion reflector 216 from above. The upper side lighting unit 113 is positioned such that the diffusively reflected light from the upper side diffusion reflector 216 is included in the light that illuminates the area where the article P is placed on the transparent plate 215.

The lower side lighting unit 114 is positioned below the transparent plate 215. The lower side diffusion reflector 217 is provided below the lower side lighting unit 214. The lower side lighting unit 214 emits light toward the lower side diffusion reflector 217. The lower side diffusion reflector 217 diffusely reflects light from the lower side lighting unit 214. The transparent plate 215 is illuminated with diffusively reflected light by the lower side diffusion reflector 217 from below. The lower side lighting unit 114 is positioned such that the diffusively reflected light from the lower side diffusion reflector 217 is included in the light that illuminates the area where the article P is placed on the transparent plate 215. The lower side lighting unit 214 emits the light in a direction so that the silhouette of the article P placed on the transparent plate 215 becomes clear as viewed from above the transparent plate 215.

An arrangement in which the article P placed on the transparent plate 215 is directly illuminated with light from the upper side lighting unit 213 and the lower side lighting unit 214 may be adopted.

Next, an example configuration of a control system in the image processing apparatus 220 of the article image capturing device according to the second embodiment will be described.

FIG. 5 is a block diagram illustrating an example configuration of the image processing apparatus 220.

As illustrated in FIG. 5, the image processing apparatus 220 includes a system control unit 221, a storing unit 222, an image acquisition unit 223, a camera control unit 224, a lighting control unit 225, an image processing unit 226, an input and output IF 227, and the like.

The image processing apparatus 220 illustrated in FIG. 5 is different from the image processing apparatus 120 illustrated in FIG. 2 in that the image acquisition unit 223 and the camera control unit 224 are also connected to the lower side camera 212. Other features of the image processing apparatus 220 illustrated in FIG. 5 are the same as the corresponding features of the image processing apparatus 120 illustrated in FIG. 2.

That is, the system control unit 221, the storing unit 222, the image acquisition unit 223, the camera control unit 224, the lighting control unit 225, the image processing unit 226, and the input and output IF 227 illustrated in FIG. 5 are similar to the system control unit 121, the storing unit 122, the image acquisition unit 123, the camera control unit 124, the lighting control unit 125, the image processing unit 126, and the input and output IF 127 illustrated in FIG. 1 and thus, detailed explanation thereof will be omitted.

The image acquisition unit 223 acquires an image captured by the upper side camera 211 or the lower side camera 212. The camera control unit 224 supplies a control signal to the upper side camera 211 or the lower side camera 212 and controls the operations of the upper side camera 211 and the lower side camera 212. The image acquisition unit 223 and the camera control unit 224 may be a single unit connected to the upper side camera 211 or the lower side camera 212. The image acquisition unit 223 may be realized by a dedicated integrated circuit (IC), or may be realized as a processor that executes a program. For example, the image acquisition unit 223 may be a function realized when the processor 221a of the system control unit 221 executes a program. The camera control unit 224 may be realized by a dedicated integrated circuit (IC), or may be realized as a processor that executes a program. For example, the camera control unit 224 may be a function realized when the processor 221a of the system control unit 221 executes a program.

Next, the operation of the article image capturing apparatus according to the second embodiment will be described.

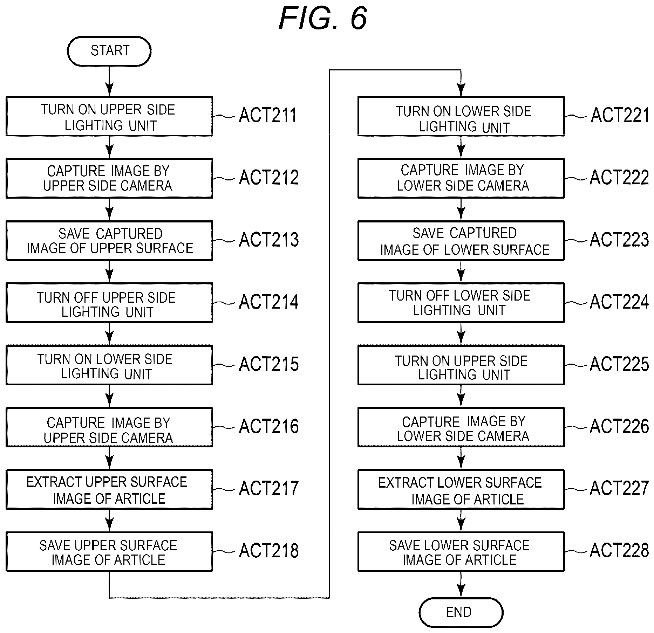

FIG. 6 is a flowchart illustrating an operation of the article image capturing apparatus according to the second embodiment.

In a state where the article P is placed on the transparent plate 215, the system control unit 221 acquires an image (hereinafter, referred to as an upper surface image) of the article P obtained by capturing an image of the article P from above and an image (hereinafter, referred to as a lower surface image) of the article P obtained by capturing an image of the article P from below. A process (upper surface image acquisition process) of acquiring the upper surface image of the article is included in ACTs 211 to 218 illustrated in FIG. 6. The process of ACTs 211 to 218 illustrated in FIG. 6 is realized by the same process as ACTs 111 to 118 of FIG. 3 described in the first embodiment.

The system control unit 221 of the image processing apparatus 220 turns on the upper side lighting unit 213 and turns off the lower side lighting unit 214 (ACT 211). In a state where the upper side lighting unit 213 is turned on, the system control unit 221 causes the upper side camera 211 to capture an image (ACT 212). Here, the upper side camera 211 captures the image of the image capturing region including the article P on the transparent plate 215 in a state where a surface (upper surface of the article) whose image is to be captured is illuminated with light. The image acquisition unit 223 of the image processing apparatus 220 acquires a captured image captured with the upper side camera 211. The system control unit 221 saves the captured image acquired by the image acquisition unit 223 in the storing unit 222 (ACT 213).

When the captured image is saved in the storing unit 222, the system control unit 221 turns off the upper side lighting unit 213 (ACT 214) and turns on the lower side lighting unit 214 (ACT 215), via the lighting control unit 225. In a state where the lower side lighting unit 214 is turned on, the system control unit 221 causes the upper side camera 211 to capture an image (silhouette image) (ACT 216). The silhouette image captured by the upper side camera 211 is acquired by the image acquisition unit 223.

The system control unit 221 supplies the silhouette image acquired by the image acquisition unit 223 to the image processing unit 226. The image processing unit 226 performs image processing on the captured image of the upper side camera 211 saved in the storing unit 222 using the supplied silhouette image (ACT 217). The image processing unit 226 specifies the contour (outer shape) of the article P from the silhouette image and extracts an image (upper surface image of the article) of the article viewed from above, from the captured image according to the specified contour (ACT 17). When the upper surface image of the article is extracted from the captured image, the system control unit 121 stores the extracted upper surface image of the article in the storing unit 222 (ACT 218).

Here, the upper side camera 211 captures the captured image and the silhouette image under the same image capturing condition. In this case, the contour of the article indicated by the silhouette image roughly represents the outer shape of the article, and indicates an image region of the article in the captured image. By utilizing such a feature, the image processing unit 226 extracts an image inside the contour of the article indicated by the silhouette image from the captured image of the article obtained from above. With this, the image processing unit 226 can accurately extract the upper surface image of the article.

The upper surface image acquisition process is ended following the process described above. When the upper surface image acquisition process is ended, the system control unit 221 executes a process (lower surface image acquisition process) of acquiring the lower surface image of the article P (ACTs 221 to 228).

That is, when the upper surface image of the article is saved in the storing unit 222, the system control unit 221 turns on the lower side lighting unit 214 and turns off the upper side lighting unit 213 (ACT 221). In a state where the lower side lighting unit 214 is turned on, the system control unit 221 causes the lower side camera 212 to capture an image (ACT 222). Here, the lower side camera 212 captures the image of the image capturing region including the article P on the transparent plate 215 in a state where the surface whose image is to be captured (lower surface of the article) is illuminated with light. The image acquisition unit 223 of the image processing apparatus 220 acquires the captured image captured by the lower side camera 212. The system control unit 221 saves the captured image of the lower side camera 212 acquired by the image acquisition unit 223 in the storing unit 222 (ACT 223).

When the captured image of the lower camera 212 is saved in the storing unit 222, the system control unit 221 turns off the lower side lighting unit 214 (ACT 224) and turns on the upper side lighting unit 213 (ACT 225), via the lighting control unit 225. In a state where the upper side lighting unit 213 is turned on, the system control unit 221 causes the lower side camera 212 to capture an image (silhouette image) (ACT 226).

The image acquisition unit 223 of the image processing apparatus 220 acquires a silhouette image captured by the lower side camera 212. The system control unit 221 provides the silhouette image acquired by the image acquisition unit 223 to the image processing unit 226. The image processing unit 226 performs image processing on the captured image of the lower side camera 212 saved in the storing unit 222 using the provided silhouette image (ACT 227). The image processing unit 226 specifies the contour (outer shape) of the article P from the silhouette image and extracts an image (lower surface image of the article) from the captured image according to the specified contour. When the lower surface image of the article is extracted from the captured image of the lower side camera 212, the system control unit 221 stores the extracted lower surface image of the article in the storing unit 222 (ACT 228).

Here, the lower side camera 212 generates the captured image and the silhouette image under the same image capturing condition. The image processing unit 226 extracts an image inside the contour of the article indicated by the silhouette image from the captured image of the article from below. With this, the image processing unit 226 can accurately extract the lower surface image of the article based on the silhouette image.

The procedure of the process described above may be modified as appropriate. For example, the order of turning on the upper side lighting unit 213 and the lower side lighting unit 214 may be performed in reverse of the procedure described above. That is, the image processing apparatus 220 may also capture the upper surface image (or the lower surface image) of the article after the silhouette image is acquired.

The upper side camera 211 and the lower side camera 212 may perform image capturing at the same time. In a state where the upper side lighting unit 213 is turned on and the lower side lighting unit 214 is turned off, the upper side camera 211 captures a captured image including the upper surface image of the article and the lower side camera 212 captures a silhouette image. Accordingly, when the upper side camera 211 and the lower side camera 212 perform image capturing simultaneously in a state where the upper side lighting unit 213 is turned on and the lower side lighting unit 214 is turned off, the captured image including the upper surface image of the article and the silhouette image from the lower side can be obtained at the same time. Similarly, when the lower side camera 212 and the upper side camera 211 perform image capturing simultaneously in a state where the upper side lighting unit 213 is turned off and the lower side lighting unit 214 is turned on, a captured image including the lower surface image of the article and a silhouette image are obtained at the same time.

By the process as described above, the article image capturing apparatus 200 according to the second embodiment acquires the upper surface image of the article and the lower surface image of the article. The upper surface image of the article is an article image extracted from the captured image captured by the upper side camera using the silhouette image. The lower surface image of the article is an article image extracted from the captured image captured by the lower side camera using the silhouette image. With this, the article image capturing apparatus 200 according to the second embodiment can acquire the upper surface image of the article and the lower surface image of the article, which are accurately extracted.

### Third Embodiment

Next, a third embodiment will be described.

FIG. 7 is a diagram schematically illustrating an example configuration of an article image capturing apparatus (article image capturing apparatus) 300 according to a third embodiment.

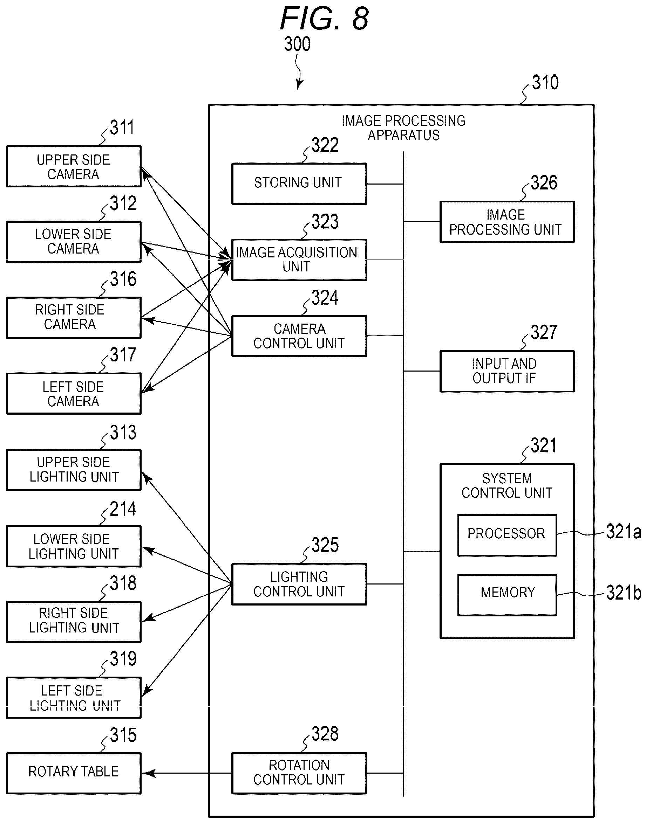

As illustrated in FIG. 7, the article image capturing apparatus 300 according to the third embodiment includes an upper side camera 311, a lower side camera 312, an upper side lighting unit 313, a lower side lighting unit 314, a rotary table 315, a right side camera 316, a left side camera 317, a right side lighting unit 318, and a left side lighting unit 319. The upper side camera 311, the lower side camera 312, the upper side lighting unit 313, the lower side lighting unit 314, the rotary table 315, the right side camera 316, the left side camera 317, the right side lighting unit 318, and the left side lighting unit 319 are connected to an image processing apparatus 320 (see FIG. 8) described later.

The configuration illustrated in FIG. 7 is similar to the configuration illustrated in FIG. 4 described in the second embodiment, with additional components including the transparent plate 215 is replaced with the rotary table 315, and the right side camera 316, the left side camera 317, the right side lighting unit 318 and the left side lighting unit 319. That is, the upper side camera 311, the lower side camera 312, the upper side lighting unit 313, and the lower side lighting unit 314 illustrated in FIG. 7 are similar to the upper side camera 211, the lower side camera 212, the upper side lighting unit 213, and the lower side lighting unit 214 illustrated in FIG. 4. Accordingly, detailed descriptions of the upper side camera 311, the lower side camera 312, the upper side lighting unit 313 and the lower side lighting unit 314 will be omitted.

A configuration may be adopted in which the article P on the transparent plate 215 is illuminated with light, via the reflection plate, from the upper side lighting unit 313, the lower side lighting unit 314, the right side lighting unit 318, and the left side lighting unit 319.

The rotary table 315 includes a transparent plate 315a on which the article P is placed and a rotation mechanism 315b. Similar to the transparent plate 115 described in the first embodiment, the transparent plate 315a is positioned to allow capture of an image of the lower surface of the placed article P from below. The rotation mechanism 315b rotates the transparent plate 315a. The rotation mechanism 315b is positioned not to shield the article P so that the lower side camera 312 can capture the entire image of the lower surface of the article P placed on the transparent plate 315a.

The right side camera 316 and the left side camera 317 capture the image of the article P placed on the rotary table 315 from the side. The right side camera 316 and the left side camera 317 are provided on the sides (third side and fourth side) of the article placed on the rotary table 315 and are face each other with the placement position interposed therebetween. In the example illustrated in FIG. 7, it is assumed that the right side camera 316 is provided on the third side (e.g. right side when viewed on Fig.7) of the article P on the rotary table 315. In the example illustrated in FIG. 7, it is assumed that the left side camera 317 is provided on the fourth side (e.g. left side when viewed on Fig.7) of the article P on the rotary table 315.

That is, the right side camera 316 is positioned so as to capture an image of a portion on the rotary table 315 from the right side, and is set so that the article P placed on the rotary table 315 is included in the image capturing range. The left side camera 317 is positioned so as to capture an image of the rotary table 315 from the left side and is set so that the article P placed on the rotary table 315 is included in the image capturing range. Similar to the camera 111, the right side camera 316 and the left side camera 317 include an image capturing unit, an optical system, and a control unit, respectively, and capture an image according to an instruction from the image processing apparatus 320.

The right side lighting unit 318 and the left side lighting unit 319 are provided at positions corresponding to the right side camera 316 and the left side camera 317, respectively. The right side lighting unit 318 and the left side lighting unit 319 face each other with the placement position of the article on the rotary table 315 interposed therebetween. The right side lighting unit 318 is positioned so as to illuminate the article P on the rotary table 315 with light from the side of the right side camera 316. The left side lighting unit 319 is positioned facing the right side camera 316 with the placement position of the article P on the rotary table 315 interposed therebetween. In other words, the right side lighting unit 318 faces the left side camera 317 with the placement position of the article P on the rotary table 315 interposed therebetween. The left side lighting unit 319 is positioned so as to illuminate the article P on the rotary table 315 with light from the side of the left side camera 317.

In the example configuration illustrated in FIG. 7, the transparent plate 315a on which the article P is placed is rotated, but the configuration is not limited thereto. Any modification of the article image capturing apparatus according to the third embodiment may be adopted as long as an angle at which the right side camera 316 and the left side camera 317 capture the image of the side surface of the article P can be changed. For example, a configuration may be adopted in which the right side camera 316, the left side camera 317, the right side lighting unit 318, and the left side lighting unit 319 rotate around the transparent plate 315a.

The article image capturing apparatus according to the third embodiment may have a configuration in which one of the right side camera 316 and the left side camera 317 is omitted. In this case, the camera (right side camera 316 or the left side camera 317) for one side surface may also rotate relative to the placement position of the article P to change the angle with respect to the side surface of the article P to capture the side surface image of the article P.

Next, a configuration of a control system in the article image capturing apparatus 300 according to the third embodiment will be described.

FIG. 8 is a block diagram illustrating an example configuration of the article image capturing apparatus 300 and the image processing apparatus 320.

As illustrated in FIG. 8, the image processing apparatus 320 includes a system control unit 321, a storing unit 322, an image acquisition unit 323, a camera control unit 324, a lighting control unit 325, an image processing unit 326, an input and output IF 327, and the like.

The image processing apparatus 320 illustrated in FIG. 8 is different from the image processing apparatus 220 illustrated in FIG. 5 in that the image acquisition unit 323 and the camera control unit 324 are also connected to the right side camera 316 and the left side camera 317. The image processing apparatus 320 illustrated in FIG. 8 is different from the image processing apparatus 220 illustrated in FIG. 5 in that the lighting control unit 325 is also connected to the right side lighting unit 318 and the left side lighting unit 319. Furthermore, the image processing apparatus 320 illustrated in FIG. 8 is different from the image processing apparatus 220 illustrated in FIG. 5 in that a rotation control unit 328 for controlling rotation of the rotary table 315 is provided.

Other than as noted above, the image processing apparatus 320 illustrated in FIG. 8 is similar to the image processing apparatus 220 illustrated in FIG. 5. That is, the system control unit 321, the storing unit 322, the lighting control unit 325, the image processing unit 326, and the input and output IF 327 illustrated in FIG. 8 are similar to the system control unit 221, the storing unit 222, the lighting control unit 225, the image processing unit 226, and the input and output IF 227 illustrated in FIG. 5 and thus, detailed descriptions thereof will be omitted.

The image acquisition unit 323 acquires images captured by the upper side camera 311, the lower side camera 312, the right side camera 316, and the left side camera 317. The camera control unit 324 supplies control signals to the upper side camera 311, the lower side camera 312, the right side camera 316, and the left side camera 317, and controls the operations of these cameras. The image acquisition unit 323 and the camera control unit 324 may be a single unit connected to the cameras 311, 312, 316, and 317. The image acquisition unit 323 may be realized by a dedicated integrated circuit (IC), or may be realized as a processor that executes a program. For example, the image acquisition unit 323 may be a function realized when the processor 321a of the system control unit 321 executes a program. The camera control unit 324 may be realized by a dedicated integrated circuit (IC), or may be realized as a processor that executes a program. For example, the camera control unit 324 may be a function realized when the processor 321a of the system control unit 321 executes a program.

The rotation control unit 328 controls rotation of the transparent plate 315a by the rotation mechanism 315b in the rotary table 315. The rotation control unit 328 supplies a control signal to the rotation mechanism 315b according to the control signal from the system control unit 321 and controls rotation of the transparent plate 315a by the rotation mechanism 315b. For example, the rotation control unit 328 controls the transparent plate 315a to rotate through a predetermined angle.

Next, the operations of the article image capturing apparatus 300 according to the third embodiment will be described.

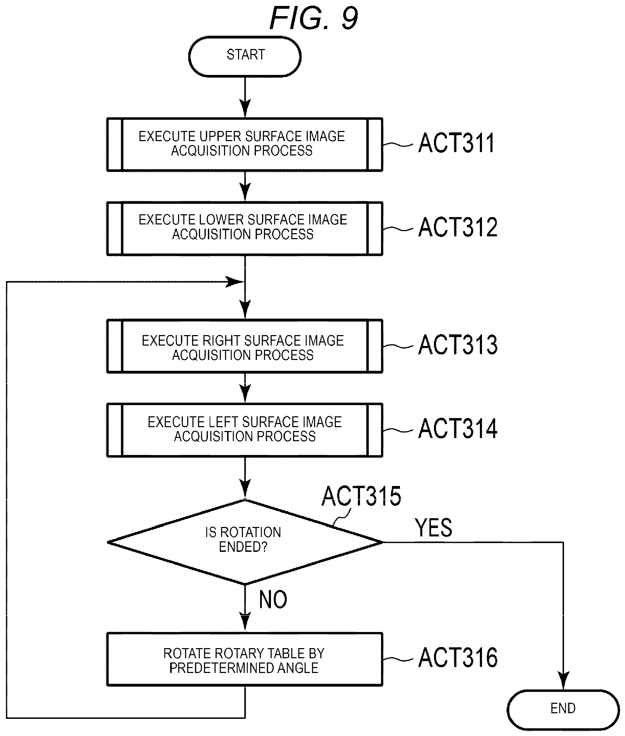

FIG. 9 is a flowchart illustrating an operation of the article image capturing apparatus 300 according to the third embodiment.

The system control unit 321 acquires the upper surface image and the lower surface image of the article P and further acquires the right surface image and the left surface image of the article P by changing the angle. The system control unit 321 executes an upper surface image acquisition process (ACT 311) and a lower surface image acquisition process (ACT 312) in a state where the article P is placed on the transparent plate 315a. The upper surface image acquisition process (ACT 311) may be equivalent to the processes of ACTs 211 to 218 illustrated in FIG. 6 described in the second embodiment. The lower surface image acquisition process (ACT 312) may be equivalent to the process of ACTs 221 to 228 illustrated in FIG. 6 described in the second embodiment. For that reason, detailed descriptions of the processes of ACT 311 and ACT 312 will be omitted.

When the upper surface image and the lower surface image are acquired, the system control unit 321 further executes acquires the right surface image and the left surface image of the article P at each predetermined angle (ACT 313 to ACT 316). At the initial position of the rotary table 315, the system control unit 321 performs the process (right surface image acquisition process) of acquiring the right surface image of the article P using the right side camera 316 (ACT 313). When the right surface image is acquired, the system control unit 321 performs the process (left surface image acquisition process) of acquiring the left surface image of the article P using the left side camera 317 (ACT 314). The right surface image acquisition process and the left surface image acquisition process will be described later in detail.

When the right surface image and the left surface image are acquired, the system control unit 321 determines whether it is necessary to acquire the right surface image and the left surface image at another angle (that is, whether it is necessary to change a image capturing angle) (ACT 315). The right side camera 316 and the left side camera 317 are rotated around the article P to capture an image in order to acquire the right surface image and the left surface image at every predetermined angle. For example, the system control unit 321 causes the right and left cameras 316, 317 to capture side surface images (the right surface image and the left surface image) following one turn of the article P by making the rotary table 315 rotate by predetermined angle.

When it is determined that it is necessary to change the image capturing angle (YES in ACT 315), the system control unit 321 causes the rotation control unit 328 to rotate the rotary table 315 by a predetermined angle (ACT 316). After the rotary table 315 is rotated by the predetermined angle, the system control unit 321 returns to ACT 313 and executes the right surface image acquisition process and the left surface image acquisition process as described above.

When it is determined that it is not necessary to change the image capturing angle (NO in ACT 315), the system control unit 321 ends image capturing of the article P on the rotary table 315. As a result of the process as described above, the upper surface image of the article, the lower surface image of the article, and the side surface image of the article from each predetermined angle are saved in the storing unit 322.

Next, an example of the right surface image acquisition process and the left surface image acquisition process will be described.

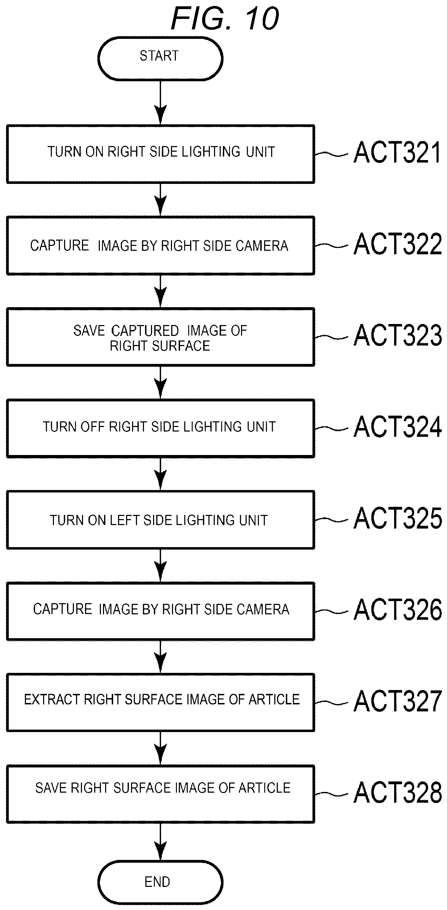

FIG. 10 is a flowchart illustrating an operation of the right surface image acquisition process.

In the right surface image acquisition process, the system control unit 321 turns on the right side lighting unit 318 and turns off the left side lighting unit 319 (ACT 311). In a state where the right side lighting unit 318 is turned on, the system control unit 321 causes the right side camera 316 to capture an image (ACT 312). Here, the right side camera 316 captures the image of the image capturing region including the article P on the transparent plate 315a in a state where the surface whose image is to be captured (right side of the article) is illuminated with light. The captured image captured by the right side camera 316 is acquired by the image acquisition unit 223. The system control unit 321 saves the captured image captured by the right side camera 316 and acquired by the image acquisition unit 323 in the storing unit 322 (ACT 313).

When the captured image is saved in the storing unit 322, the system control unit 321 turns off the right side lighting unit 318 (ACT 314) and lights the left side lighting unit 319 (ACT 315), via the lighting control unit 325. In a state where the left side lighting unit 319 is turned on, the system control unit 321 causes the right side camera 316 to capture an image (silhouette image) (ACT 316). The silhouette image captured by the right side camera 316 is acquired by the image acquisition unit 323.

The system control unit 321 supplies the silhouette image acquired by the image acquisition unit 323 to the image processing unit 326. The image processing unit 326 performs image processing on the captured image captured by the right side camera 316 saved in the storing unit 322 using the supplied silhouette image (ACT 317). The image processing unit 326 specifies the contour (outer shape; appearance) of the article P from the silhouette image and extracts the right surface image of the article from the captured image captured by the right side camera 316 based on the specified contour. When the right surface image of the article is extracted, the system control unit 321 stores the extracted right surface image of the article in the storing unit 322 (ACT 318).

Here, the right side camera 316 captures the image from the right side of the article and the silhouette image under the same image capturing condition. The image processing unit 326 extracts an image inside the contour of the article indicated by the silhouette image from the captured image obtained by image capturing the article from the right side. With this, the image processing unit 326 can accurately extract the image of the right side of the article. Following the process as described above, the acquisition process of the right surface image of the article is ended.

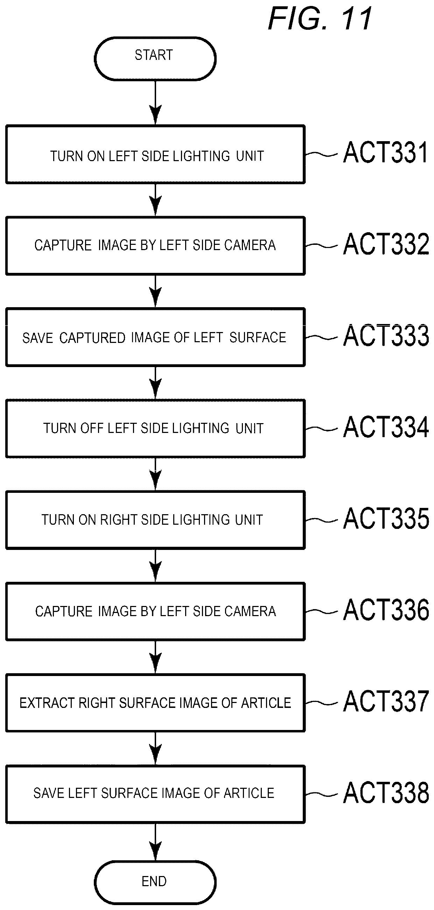

FIG. 11 is a flowchart illustrating an operation of the left surface image acquisition process.

In the left surface image acquisition process, the system control unit 321 turns on the left side lighting unit 319 and turns off the right side lighting unit 318 (ACT 321). In a state where the left side lighting unit 319 is turned on, the system control unit 321 causes the left side camera 317 to capture an image (ACT 322). Here, the left side camera 317 captures the image of the image capturing region including the article P on the transparent plate 315a in a state where the surface whose image is to be captured (left surface of the article P) is illuminated with light. The captured image captured by the left side camera 317 is acquired by the image acquisition unit 323. The system control unit 321 saves the captured image captured by the left side camera 317 and acquired by the image acquisition unit 323 in the storing unit 322 (ACT 323).

When the captured image is saved in the storing unit 322, the system control unit 321 turns off the left side lighting unit 319 (ACT 324) and turns on the right side lighting unit 318 (ACT 325), by the lighting control unit 325. In a state where the right side lighting unit 318 is turned on, the system control unit 321 causes the left side camera 317 to capture an image (silhouette image) (ACT 326). The silhouette image captured by the left side camera 317 is acquired by the image acquisition unit 323.

The system control unit 321 supplies the silhouette image acquired by the image acquisition unit 323 to the image processing unit 326. The image processing unit 326 performs image processing on the captured image captured by the left side camera 317 saved in the storing unit 322 using the supplied silhouette image (ACT 327). The image processing unit 326 specifies the contour (outer shape; appearance) of the article P from the silhouette image and extracts the left surface image of the article from the captured image captured by the left side camera 317 based on the specified contour. When the left surface image of the article is extracted, the system control unit 321 stores the extracted left surface image of the article in the storing unit 322 (ACT 328).

Here, the left side camera 317 also captures the image from the left side of the article and the silhouette image under the same image capturing condition. The image processing unit 326 extracts an image inside the contour of the article indicated by the silhouette image from the image obtained by image capturing the article from the left side. With this, the image processing unit 326 can accurately extract the image of the left surface of the article. The acquisition process of the left surface image of the article is ended following the process as described above.

By the process as described above, the article image capturing apparatus 300 according to the third embodiment acquires the upper surface image of the article, the lower surface image of the article, and the side surface image of the article at each angle. The upper surface image of the article is an article image extracted from the image captured by the upper side camera using the silhouette image. The lower surface image of the article is an article image extracted from the image captured by the lower side camera using the silhouette image. The side surface image of the article at each predetermined angle is an article image extracted from the image captured by the right side camera or the left side camera using the silhouette image for each predetermined angle. With this, the article image capturing apparatus 300 according to the third embodiment can acquire the upper surface image of the article, the lower surface image of the article, and the side surface image of the article at each predetermined angle, which are accurately extracted.

### Modification Example

Next, a modification example of the first to third embodiments described above will be described.

In the article image capturing apparatuses according to the first to third embodiments, each camera captures the silhouette image of the article in a state where light is emitted from the facing lighting unit. This is a configuration for obtaining a clear silhouette image by shielding light from the lighting unit provided at a position where the article is positioned between the lighting unit and the camera. However, a semi-transparent article (including partially semi-transparent article) may transmit light from the lighting unit in a semi-transparent portion. For example, articles such as semitransparent pet cages or glass products transmit light in translucent parts. For that reason, each of the cameras described in the first to third embodiments may be configured so that light enters after passing through a polarization filter.

The semi-transparent portion which constitutes the article is often formed of resin or the like and has birefringence properties. For that reason, the light transmitted through the semi-transparent article having birefringence properties is polarized. In this modification example, illumination light from the lighting unit becomes polarized, and a polarization filter is attached to the front surface of the camera. According to such a configuration, the difference in the amount of light received by the camera between the light transmitted through the semi-transparent portion of the article and direct light (lighting light) from the lighting unit becomes large. As a result, the image of the silhouette captured by the camera can be made clear even if a captured image includes a semi-transparent portion of the article. When light emitted by the lighting unit is unpolarized light (e.g. not linearly polarized light), a polarizer may be attached to the end of the lighting unit, and the article may be illuminated with only the linearly polarized light component.

According to the article image capturing apparatus to which such a modification example is applied, it is possible to obtain a clear silhouette image even for an article partially or wholly semi-transparent. As a result, in the article image capturing apparatus according to the modification example, it is possible to accurately determine the contour (outer shape) of the article, and accurately extract the article image from the captured image.

As described above, in the article image capturing apparatus according to each embodiment, the image of the article is captured in the state where the lighting unit positioned on the camera side is turned off and the lighting unit positioned on the side facing the camera is turned on. In such a lighting state, light does not illuminate a surface of the article on the side captured by the camera, and an image in which the silhouette of the article is clear can be obtained. The image processing apparatus extracts an article image from the captured image captured by the camera in a state where the lighting unit on the camera side is turned on, based on the contour of the article obtained from the silhouette image. As a result, in the article image capturing apparatus according to each embodiment, it is possible to accurately and easily extract the article image from the captured image captured by the camera.

In the article image capturing apparatus according to the second embodiment, the camera and the lighting unit are installed respectively on the upper side and the lower side of the transparent plate on which the article is placed. The article image capturing apparatus changes the lighting state between the upper side lighting unit and the lower side lighting unit and acquires the upper surface image of the article extracted from the captured image using the silhouette image captured by the upper side camera. The article image capturing apparatus changes the lighting state between the upper side lighting unit and the lower side lighting unit and acquires the lower surface image of the article extracted from the captured image using the silhouette image captured by the lower side camera. With this, in the article image capturing apparatus according to the second embodiment, it is possible to acquire the upper surface image of the article and the lower surface image of the article, which are accurately extracted from the captured images of the respective cameras.

In the article image capturing apparatus according to the third embodiment, the cameras and the lighting unit are respectively provided on the upper side, the lower side, the right side, and the left side of the transparent plate on which the article is placed. The article image capturing apparatus changes the lighting state between the upper side lighting unit and the lower side lighting unit and acquires the upper surface image and the lower image of the article from the images captured by the upper side camera and the lower side camera. Furthermore, the article image capturing apparatus sequentially changes the angle at which the right and left side cameras capture the image of the article and controls the lighting state of the right side lighting unit and the left side lighting unit. With this, the article image capturing apparatus acquires the right surface image and the left surface image of the article for each set angle. Accordingly, in the article image capturing apparatus according to the third embodiment, it is possible to acquire not only the upper surface image and the lower surface image of the article but also right surface images and the left surface images of the article captured at different angles.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An article image capturing apparatus comprising:
a camera configured and positioned to capture an image of a surface on which an article is placed;
a first lighting unit configured and positioned to illuminate a first side of the article placed on the surface, the first side of the article facing the camera;
a second lighting unit positioned facing the camera so that the surface on which the article is placed is between the second lighting unit and the camera, and configured to illuminate a second side of the article opposite the first side;
a storage device; and
a processor programmed to control the camera, the first lighting unit, the second lighting unit, and the storage unit to:
capture a first image of the surface in a state in which the first lighting unit is turned on,
capture a second image of the surface in a state in which the first lighting unit is turned off and the second lighting unit is turned on,
determine, based on the second image, an outer shape of the article,
extract, from the first image, an image of the article based on the outer shape of the article, and
store the extracted image of the article in the storage device.

2. The apparatus according to claim 1, further comprising:
a transparent plate having the surface on which the article is placed, wherein, the first lighting unit is positioned above the transparent plate, and
the second lighting unit is positioned below the transparent plate.

3. The apparatus according to claim 1 or 2, further comprising:
a lower side camera positioned below the transparent plate, wherein,
the camera is an upper side camera positioned above the transparent plate, and
the processor is further programmed to control the lower side camera, the first lighting unit, the second lighting unit, and the storage device to:
capture a third image of the surface in a state in which the second lighting unit is turned on,
capture a fourth image of the surface in a state in which the second lighting unit is turned off and the first lighting is turned on,
determine, based on the fourth image, an outer shape of a bottom side of the article,
extract, from the third image, an image of the bottom side of article based on the outer shape of the bottom side of the article, and
store the extracted image of the bottom side of the article in the storage device.

4. The apparatus according to claim 3, further comprising:
a right side camera positioned on a third side of the article placed on the surface ;
a right side lighting unit configured and positioned to illuminate the third side of the article placed on the surface; and
a left side lighting unit positioned facing the right side camera so that the surface on which the article is placed is between the left side lighting unit and the right side camera, and configured to illuminate a fourth side of the article opposite the third side, wherein
the processor is further programmed to control the right side camera, the right side lighting unit, the left side lighting unit, and the storage device to:
capture, with the right side camera, a fifth image of the right side of the surface in a state in which the right side lighting unit is turned on,
capture, with the right side camera, a sixth image of the surface in a state in which the right side lighting unit is turned off and the left side lighting unit is turned on,
determine, based on the sixth image, an outer shape of the third side of the article,
extract, from the fifth image, an image of the third side of the article based on the outer shape of the third side of the article, and
store the extracted image of the third side of the article in the storage device.

5. The apparatus according to claim 4, further comprising:
a left side camera positioned on the fourth side of the transparent plate with respect to the surface, wherein
the processor is further programmed to control the left side camera, the right side lighting unit, the left side lighting unit, and the storage device to:
capture, with the left side camera, a seventh image of the fourh side of the surface in a state in which the left side lighting unit is turned on,
capture, with the left side camera, an eighth image of the surface in a state in which the left side lighting unit is turned off and the right side lighting unit is turned on,
determine, based on the eighth image, an outer shape of the fourth side of the article,
extract, from the seventh image, an image of the fourth side of the article based on the outer shape of the fourth side of the article, and
store the extracted image of the fourth side of the article in the storage device.

6. The apparatus according to claim 4 or 5, further comprising:
a rotation mechanism configured to rotate the transparent plate, wherein the processor is further configured to:
after the fifth and sixth images are captured, control the rotation mechanism to rotate the transparent plate by a predetermined degree,
after the transparent plate is rotated by the predetermined degree, capture, with the right side camera, a seventh image of the third side of the article in a state in which the right side lighting unit is turned on, and capture, with the right side camera, an eighth image of the surface in a state in which the right side lighting unit is turned off and the left side lighting unit is turned on,
determine, based on the eighth image, an outer shape of the third side of the article after the transparent plate is rotated by the predetermined degree,
extract, from the seventh image, an image of the third side of the article after the transparent plate is rotated by the predetermined degree, based on the outer shape of the third side of the article, and
store the extracted image of the third side of the article after the transparent plate is rotated by the predetermined degree, in the storage device.

7. The apparatus according to any one of claims 1 to 6, further comprising:
a first diffusion reflector configured and positioned to reflect light emitted from the first lighting unit to illuminate the first side of the article.

8. The apparatus according to claim 7, further comprising:
a second diffusion reflector configured and positioned to reflect light emitted from the first lighting unit to illuminate the second side of the article.

9. The apparatus according to any one of claims 1 to 8, further comprising:
a polarization filter positioned between the camera and the second lighting unit and configured to filter out light having a specific polarization.

10. The apparatus according to claim 9, wherein the polarization filter filters out light having the specific polarization selected based on a semi-transparent portion of the article that transmits, from unpolarized light incident thereon, only light having the specific polarization.

11. A method of capturing an image of an article, the method comprising the steps of:
capturing, with a camera, a first image of a first side of the article in a state in which first lighting unit is turned on to illuminate the first side;
capturing, with the camera, a second image of the first side of the article in a state in which the first lighting unit is turned off and a second lighting is turned on to illuminate a second side of the article opposite the first side;
determining, based on the second image, an outer shape of the article;
extracting, from the first image, an image of the article based on the outer shape of the article; and
saving the extracted image of the article.

12. The method according to claim 11, further comprising the step of:
polarizing the light emitted from the second lighting unit to a specific polarization, wherein the article is includes a partially transparent portion that does not transmit light having the specific polarization that is incident thereon.

13. A non-transitory computer readable medium storing a program causing a computer to execute the method according to claim 11 or 12.
